# EUROPEAN PATENT SPECIFICATION

(11) **EP 3 138 723 B1**
(45) Date of publication and mention of the grant of the patent: **31.03.2021**
(21) Application number: 16186604.1
(22) Date of filing: 31.08.2016
(51) Int. Cl.: B60K 37/06

(54) **VEHICULAR INFORMATION PROCESSING APPARATUS**
FAHRZEUGINFORMATIONSVERARBEITUNGSVORRICHTUNG
APPAREIL DE TRAITEMENT D'INFORMATIONS DE VÉHICULE

(30) Priority: 01.09.2015 JP 2015172388
(43) Date of publication of application: 08.03.2017
(73) Proprietor: Mitsubishi Jidosha Kogyo Kabushiki Kaisha, Tokyo 108-8410 (JP)
(72) Inventor: HIRANO, Toyohito, Tokyo, 108-8410 (JP); KOBAYASHI, Yoichi, Tokyo, 108-8410 (JP); MORIKAWA, Susumu, Tokyo, 108-8410 (JP); IRIKATA, Shingo, Tokyo, 108-8410 (JP); KAWASAKI, Akinori, Tokyo, 108-8410 (JP)
(74) Representative: Vossius & Partner Patentanwälte Rechtsanwälte mbB

(56) References cited:
- JP-A- 2005 119 465
- US-A1- 2013 278 404

## Description

### BACKGROUND OF THE INVENTION

### 1. Technical Field

The present invention relates to a vehicular information processing apparatus which displays a running state change corresponding to a running mode change when a new vehicle running mode has been set.

### 2. Background Art

Conventionally, techniques for controlling the running state of a vehicle to improve the safety and stability of running of the vehicle have been proposed. Among running state control techniques are techniques for controlling a driving state. For example, a technique of feedback-controlling the drive power difference between the left wheel and the right wheel of a vehicle and the braking force for each wheel on the basis of the yaw rate of the vehicle and a technique of feedback-controlling an electronic control LSD (limited slip differential) of a center differential gear for varying the degree of limitation of differential operation of the front wheels and the rear wheels (refer to Japanese Patent No. 4,288,482, for example) are known.

An example vehicle running state is a vehicle height. More specifically, a technique for adjusting the vehicle height by changing the total length of the suspensions according to a road surface type is known.

JP 2005 119465 A discloses a vehicular display device by a three-dimensional image, intelligibly indicating various handling accompanied with the operation of a vehicle or an operation state, to a driver.

US2013/0278404 A1 provides a method and apparatus for displaying energy flow in a hybrid vehicle. The application adds a function, which displays breakdown and abnormal state information on modules.

In such vehicle running state control techniques, a user can change the running state setting to a desired one using an input/output device installed in the vehicle, such as a touch screen display. In this manner, the user can drive the vehicle by selecting a desired running state easily.

However, where the running state setting is changed using a touch screen display or the like, a message to the effect that a setting change has been completed is merely displayed to the user. Thus, it is difficult for the user to recognize what device(s) of the vehicle has been varied in what way by the setting change. As a result, the user may not be able to understand a resulting vehicle running state sufficiently.

The present invention has been made in view of the above circumstances, and an object of the invention is therefore to provide a vehicular information processing apparatus which, when a new vehicle running mode has been set, can display a vehicle running state corresponding to the new vehicle running mode in an easily understandable manner.

### SUMMARY OF THE INVENTION

To solve the above problems, the invention provides a vehicular information processing apparatus according to the subject-matter of claim 1.

When the running mode has been changed, this vehicular information processing apparatus can convey the change of the vehicle running state visually to a user. This allows the user to easily understand that the running state has been changed as a result of the running mode change. Furthermore, since the change of the running state is displayed together with a skeleton image of the vehicle, the user can visually recognize internal components of the vehicle easily. Thus, how the states of the internal components have changed can be conveyed to the user in an easily understandable manner.

### BRIEF DESCRIPTION OF THE DRAWINGS

Fig. 1 shows a general configuration of a vehicle that is equipped with a vehicular information processing apparatus according to an embodiment of the present invention.
Fig. 2 shows an example picture displayed on a touch screen display.
Fig. 3 shows another example picture displayed on the touch screen display.
Fig. 4 shows a further example picture displayed on the touch screen display.

### DESCRIPTION OF PREFERRED EMBODIMENT

An embodiment of the present invention will be described below. However, the embodiment is just an example and should not be construed as restricting the invention.

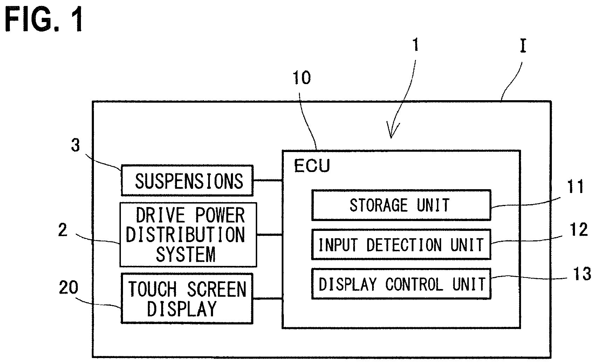

Fig. 1 shows a general configuration of a vehicle I that is equipped with a vehicular information processing apparatus 1 according to the embodiment. The vehicle I, which is a four-wheel-drive vehicle, is equipped with a drive power distribution system 2 and suspensions 3 in addition to the vehicular information processing apparatus 1.

The drive power distribution system 2 has a rear anti-lock braking system (ABS), an active center differential (ACD) system for controlling the degree of limitation of differential operation of the front wheels and the rear wheels, an active yaw control (AYC) system for controlling the drive power difference between the rear-left wheel and the rear-right wheel, and an active stability control (ASC) system for controlling the degrees of braking of the four wheels, and controls these systems on a unified manner to satisfy both of necessary turning performance and acceleration performance of the vehicle I. In the vehicle I which has the drive power distribution system 2, during, for example, cornering or deceleration, the drive power of each of the rear-left wheel and the rear-right wheel is controlled and the degree of limitation of differential operation of the front wheels and the rear wheels is increased to enhance the stability. During a turn, the drive power of each of the rear-left wheel and the rear-right wheel is controlled and the degree of limitation of differential operation of the front wheels and the rear wheels is lowered to enhance the turn-in ability.

The suspensions 3 are configured so as to be variable in total length, and their total length can be set at a desired value by the vehicular information processing apparatus 1. The vehicle height can be set at a desired value by controlling the total length of the suspensions 3.

The vehicular information processing apparatus 1 is equipped with a main body unit 10 which performs various kinds of processing and a touch screen display 20 which is an example input/output device for displaying various kinds of information and receiving an input manipulation.

The touch screen display 20 displays various kinds of information on its screen under the control of the main body unit 10, and sends the main body unit 10 an electrical signal indicating an input manipulation made on the screen. The electrical signal is a signal indicating a finger touch position on the screen. The input/output device is not limited to the touch screen display 20; for example, an output device such as a liquid crystal display and an input device such as a touch panel may be installed separately. There are no particular limitations on the installation location of the touch screen display 20; in the embodiment, it is disposed between the driver seat and the front passenger seat.

The main body unit 10 is implemented as an electronic control unit (ECU). The main body unit 10 is equipped with a storage unit 11, an input detection unit 12, and a display control unit 13.

The input detection unit 12 detects a user manipulation on the basis of an electrical signal indicating an input manipulation that has been made on the touch screen display 20. The user manipulation is a series of finger movements with a touch on the touch screen display 20. Example user manipulations are a slide manipulation, a click manipulation, and a pinch manipulation.

The slide manipulation is a manipulation that a finger is moved in a top-bottom direction or a left-right direction on the screen. The input detection unit 12 detects a slide manipulation on the basis of a variation of the finger touch position on the screen of the touch screen display 20. A slide manipulation that a finger is moved leftward from a start point is called a left slide manipulation. Likewise, slide manipulations that a finger is moved rightward, upward, downward from a start position are called a right slide manipulation, an up slide manipulation, and a down slide manipulation, respectively.

The click manipulation is a manipulation that a finger touches the screen of the touch screen display 20 at one point for a short time. The pinch manipulation is a manipulation that two fingertips move closer to each other or away from each other while being kept in contact with the screen of the touch screen display 20.

The storage unit 11 is stored with vehicle running states each including a vehicle height and a manner of drive power distribution for plural respective running modes.

The vehicle running state is information including specific values of the vehicle height and the setting parameters of the drive power distribution. The drive power distribution system 2 and the suspensions 3 are adjusted so as to attain a vehicle height and a manner of drive power distribution that are suitable for a specified running state.

The running mode is information for identification of a running mode. Various running modes are presented to a user and selection is made between them. Example running modes are "sand," "rock," and "expressway." Running states suitable for these respective running modes are stored in the storage unit 11 in advance. Table 1 shows example corresponding relationships between the running mode and the running state.

**[Table 1]**

| Running mode | Running state |
|---|---|
| Sand | Suspensions: medium |
| Rock | Suspensions: high |
| Expressway | Suspensions: low |

In this manner, the running states are stored in the storage unit 11 so as to be correlated with the respective running modes. The display control unit 13 can therefore read out a running state corresponding to a particular running state from the storage unit 11.

The display control unit 13 displays the running modes on the touch screen display 20 and selects one of the displayed running modes on the basis of an input manipulation performed on the touch screen display 20. The display control unit 13 controls the drive power distribution system 2 and the suspensions 3 so as to attain the running state corresponding to the selected running mode.

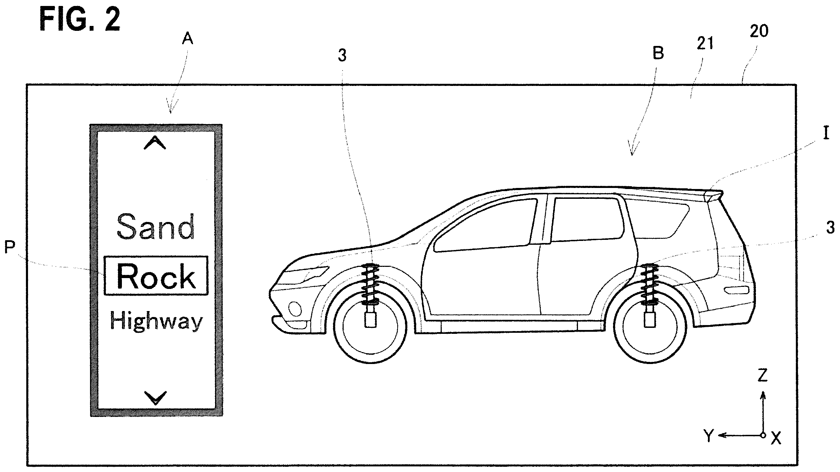

Referring to Figs. 2-4, a description will be made of how the display control unit 13 performs display and control. Figs. 2-4 show example pictures displayed on the touch screen display 20.

As shown in Fig. 2, the display control unit 13 displays the running modes and a vehicle image in an image display area 21 of the touch screen display 20. In the display area 21, a region where to display the running modes is called a running mode selection region A and a region where to display a vehicle image is called a vehicle display region B.

In the embodiment, the running mode selection region A and the vehicle display region B are a left-side region and a right-side region of the display area 21, respectively. As mentioned above, the touch screen display 20 is disposed between the driver seat and the front passenger seat. The driver seat is disposed on the left side in the vehicle I in its width direction. With this location of the touch screen display 20 and the arrangement of the running mode selection region A and the vehicle display region B, the running mode selection region A of the display area 21 is located closer to the driver seat, which allows the driver to make a touch manipulation easily in the running mode selection region A.

The display control unit 13 displays character strings indicating the respective running modes the corresponding running states of which are stored in the storage unit 11, in the running mode selection region A in such a manner that they are arranged vertically. It goes without saying that the manner of display of the running modes is not limited to this; the running modes may be displayed in the form of figures such as icons. And the manner of arrangement of the running modes is not limited to vertical arrangement and may be in any manner. The display control unit 13 selects one of the running modes when a user manipulation is detected by the input detection unit 12. Specific processing that is performed by the display control unit 13 will be described below in detail.

First, the display control unit 13 displays the running modes in the running mode selection region A in such a manner that they are arranged vertically with a center running mode located at a prescribed position P. More specifically, the display control unit 13 sets the prescribed position P approximately at the center of the running mode selection region A and arranges the three running modes vertically so that a current running mode (assumed here to be "rock") among the running modes "sand," "rock," and "expressway" is displayed at the prescribed position P.

The display control unit 13 displays the selected item located at the prescribed position P in such a manner as to indicate that it is selected currently. In the embodiment, a selected item located at the prescribed position P is displayed in bold and enclosed by a frame.

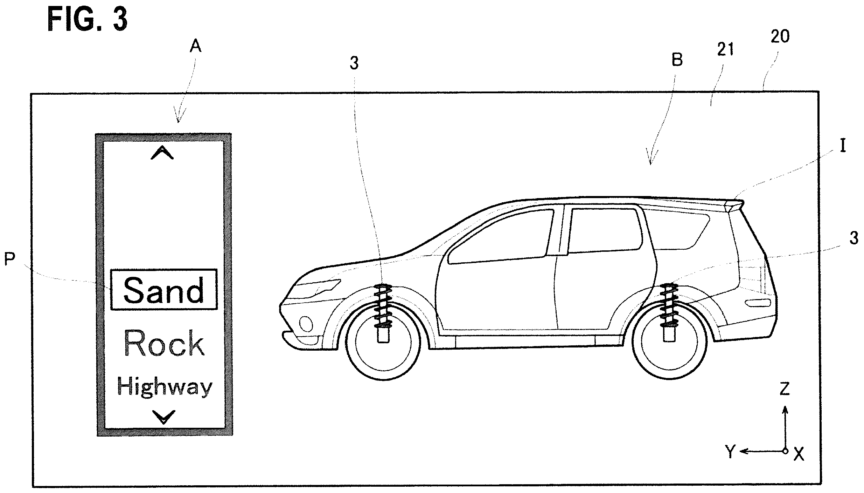

If as shown in Fig. 3 a slide manipulation in the vertical direction (i.e., up slide manipulation or down slide manipulation) is thereafter detected as a user manipulation, the display control unit 13 moves the running modes vertically in the running mode selection region A. For example, if a down slide manipulation is detected as a user manipulation, the display control unit 13 moves all the running modes downward so that "sand" is displayed at the prescribed position P.

Then the display control unit 13 stores, as a selected running mode, the running mode "sand" that has been newly displayed at the prescribed position P. The display control unit 13 displays "sand" as the selected running mode in bold so as to be surrounded by a frame, and returns "rock" that was selected before the user manipulation to the original display form.

That is, whereas moving the display modes vertically according to a user manipulation, the display control unit 13 always displays a selected display mode at the prescribed position P in the running mode selection region A in bold so as to be surrounded by a frame. In this manner, the display control unit 13 informs the user of a change of the running mode while always displaying a selected running mode at the prescribed position P.

After the above-described change of the running mode, the display control unit 13 performs controls for adjusting the drive power distribution system 2 and the suspensions 3 so as to attain a running state corresponding to the selected running mode. Since the running mode "sand" has been selected, the display control unit 13 performs a control so as to set the total length of the suspensions 3 at the corresponding value "medium" (a specific length is set in advance).

On the other hand, as shown in Figs. 2 and 3, the display control unit 13 displays an image of the vehicle I in the vehicle display region B. The image of the vehicle I is stored in the storage unit 11 in the form of 3D data, and the display control unit 13 displays it after performing a coordinate calculation and drawing processing.

In a prescribed period from a start of change of the running mode, the vehicle I is displayed in the form of a skeleton image (see Figs. 2 and 3). The skeleton image of the vehicle I means a wire-frame image of its 3D data. In the embodiment, a side view of the vehicle I is displayed in skeleton form in the vehicle display region B.

The display control unit 13 displays a running state in animation form together with a skeleton image of the vehicle I. In the embodiment, since the running state consists of a manner of power distribution and a total height of the suspensions 3, the display control unit 13 displays, in animation form, how they vary as the running state changes.

Since as described above the running mode change from "rock" to "sand" has been commanded, the display control unit 13 starts an animation with the running state (suspensions: high) corresponding to the running mode "rock" (see Fig. 2). The display control unit 13 changes the animation so that it will ends with the running state (suspensions: medium) corresponding to the running mode "sand" (see Fig. 3) in a prescribed time. That is, the display control unit 13 displays an animation in which the total length of the suspensions 3 displayed in the vehicle display region B is shortened gradually from "high" to "medium" and the vehicle height decreases accordingly.

Although not shown in Figs. 2 and 3, when the running mode change has been commanded, a manner of drive power distribution of the drive power distribution system 2 may be displayed in the vehicle display region B as part of the running state corresponding to the new running mode.

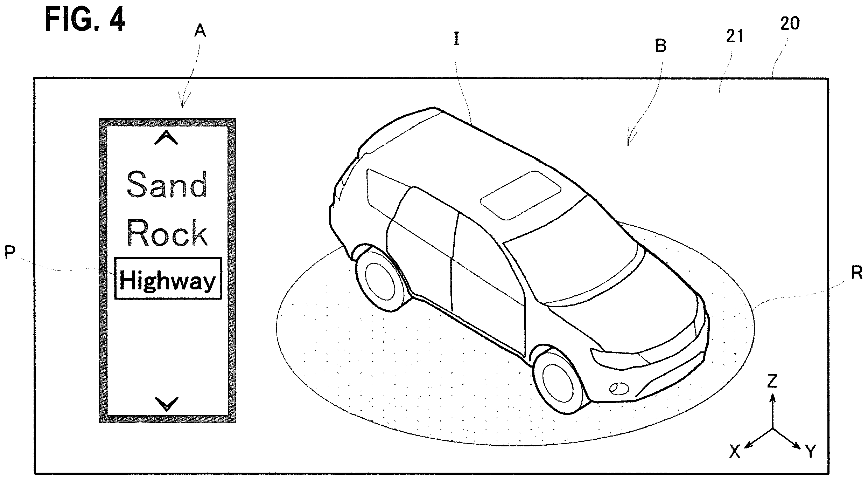

After the animated display of the new running state together with the skeleton image of the vehicle I, the display control unit 13 displays an appearance of the vehicle I in a manner shown in Fig. 4, that is, in the form of an image in which the surface of the vehicle I is colored unlike the skeleton image. In the embodiment, an appearance of the vehicle I is displayed in the form of a perspective view.

The display control unit 13 displays an animation in which an image of the vehicle I is rotated during a transition from Fig. 3 (the side skeleton view of the vehicle I) to Fig. 4 (the perspective view showing the appearance of the vehicle I). More specifically, the display control unit 13 moves the viewing point from that of the side view (Fig. 3) to that of the perspective view (Fig. 4). While moving the viewing point, the display control unit 13 displays an animation in which the image of the vehicle I is rotated a prescribed number of times about the Z axis in a virtual space.

Furthermore, while displaying the animation in which the image of the vehicle I is rotated, the display control unit 13 varies the transparency of the colored image of the vehicle I. More specifically, in displaying the appearance of the vehicle I, as time elapses the display control unit 13 lowers the transparency of the colored image gradually from level "1" (at the start of the rotational animation display, the vehicle image is not colored (skeleton image)) to level "0" (at the end, the vehicle image is colored fully).

In displaying the appearance of the vehicle I in the form of a perspective view, the display control unit 13 may also display a road surface corresponding to the running mode. For example, where the running mode is "expressway," the display control unit 13 displays a road surface image R indicating that the surface to which the tires of the vehicle I are supposed to be in contact is a paved surface.

As described above, when the running mode of the vehicle I has been changed, the vehicular information processing apparatus 1 according to the embodiment can convey a change of the running state of the vehicle I to the user visually by, for example, displaying a vehicle height variation in the form of an animation. This allows the user to understand easily that the running state has been changed as a result of the running mode change.

The running state change is displayed together with a skeleton image of the vehicle I. The skeleton display allows the user to visually recognize the suspensions 3 easily which are internal components of the vehicle I, and hence makes it possible to convey how the states of the suspensions 3 have been changed to the user in a more easily understandable manner.

Thus, when the running mode of the vehicle I has been changed, the vehicular information processing apparatus 1 according to the embodiment can display the vehicle running state corresponding to the new running mode in such a manner that it can be understood easily by the user.

The vehicular information processing apparatus 1 according to the embodiment displays a road surface state corresponding to the selected running mode on the touch screen display 20 together with an appearance of the vehicle I. This allows the user to visually recognize a road surface state easily that is suitable for the selected running mode. Since by looking at the road surface displayed in the vehicle display region B the user can recognize whether it is sandy, rocky, or of an expressway, the user can easily check whether he or she has selected a correct running mode.

The vehicular information processing apparatus 1 according to the embodiment displays a side skeleton view of the vehicle I on the touch screen display 20. This makes it possible to convey a vehicle height change to the user in a more easily understandable manner.

The vehicular information processing apparatus 1 according to the embodiment displays an appearance of the vehicle I on the touch screen display 20 in the form of a perspective view. This makes it possible to convey a state of a road surface to which the tires of the vehicle I are supposed to be in contact to the user in a more easily understandable manner.

During a transition from a skeleton display to an appearance display of the vehicle I, the vehicular information processing apparatus 1 according to the embodiment displays, on the touch screen display 20, an animation in which the vehicle I is rotated. This allows the user to check the running state that has been applied to the vehicle I from all directions with respect to the vehicle I, and hence makes it possible to convey the new running state to the user in a more easily understandable manner.

In the vehicular information processing apparatus 1 according to the embodiment, the touch screen display 20 is disposed between the driver seat and the front passenger seat and the running mode selection region A is located on the side that is closer to the driver seat in the display area 21 of the touch screen display 20. This makes it easier for the driver to make a touch manipulation in the running mode selection region A. Furthermore, this lowers the degree of movement of the line of sight of the driver that occurs when he or she changes the running mode.

Although the embodiment of the invention has been described above, it goes without saying that the invention is not limited to the embodiment and new components may be added and part of the components of the embodiment may be omitted, replaced by other components, or modified in various other manners without departing from the spirit and scope of the invention.

For example, although the embodiment employs the three running modes "sand," "rock," and "expressway," the invention is not limited to that case; any running modes may be employed. Although in the embodiment the user manipulation for selecting a running mode is a slide manipulation, a running mode may be selected by any kind of user manipulation.

Although in the embodiment a selected running mode is displayed at the prescribed position P in the running mode selection region A, the invention is not limited to that case; a selected running mode may be displayed at any position.

Although in the embodiment a skeleton image of the vehicle I is displayed as a side view and an appearance of the vehicle I is displayed as a perspective view, the invention is not limited to that case; each of them may be displayed from any viewing point. Furthermore, although in the embodiment, an image of the vehicle I is displayed as an animation in which it is rotate about the Z axis, this display may be omitted.

Although in the vehicular information processing apparatus 1 according to the embodiment the running modes and an animation are displayed on the touch screen display 20, the invention is not limited to that case; the running modes and an animation may be displayed on different screens. For example, in a vehicle that is equipped with plural display devices such as a touch screen display and a liquid crystal display, a vehicular information processing apparatus may be configured in such a manner that the running modes are displayed on one display device and an animation is displayed on another display device.

The invention can be applied to the field of the automobile industry.

## Claims

1. A vehicular information processing apparatus having:
a storage unit (11) in which running states of a vehicle (I) each including a height of the vehicle and a manner of drive power distribution are stored so as to correspond to respective running modes;
a touch screen display (20) that receives an input manipulation for selecting one of the running modes; and
a display control unit (13) that causes the touch screen display (20) to make a display that indicates the selected running mode, **characterized in that**:
the display control unit (13) causes the touch screen display (20) to display:
a running mode selection region (A) with which one of the running mode is selectable;
a vehicle display region (B) on which a running state corresponding to the selected running mode and a skeleton image of the vehicle are displayed in the form of an animation and an appearance of the vehicle (I) is displayed.

2. The vehicular information processing apparatus according to claim 1, **characterized in that** the display control unit (13) causes the touch screen display (20) to display a road surface state corresponding to the running mode together with the appearance of the vehicle (I).

3. The vehicular information processing apparatus according to claim 1 or 2, **characterized in that** the display control unit (13) causes the touch screen display (20) to display the skeleton image of the vehicle (I) in the form of a side view.

4. The vehicular information processing apparatus according to any one of claims 1 to 3, **characterized in that** the display control unit (13) causes the touch screen display (20) to display the appearance of the vehicle (I) in the form of a perspective view.

5. The vehicular information processing apparatus according to any one of claims 1 to 4, **characterized in that** after the display of the skeleton image of the vehicle (I) and until the display of the appearance of the vehicle (I), the display control unit (13) causes the touch screen display (20) to display an animation in which an image of the vehicle (I) is rotated.

6. The vehicular information processing apparatus according to any one of claims 1 to 5, **characterized in that**:
the touch screen display (20) has a display area (21) and is disposed between a driver seat and a front passenger seat of the vehicle (I); and
the display control unit (13) causes the touch screen display (20) to display, in the display area (21), the plural running modes and at least one of the skeleton image and the appearance of the vehicle (I) in such a manner that a display position of the plural running modes is closer to the driver seat than a display position of the at least one of the skeleton image and the appearance of the vehicle (I).

## Patentansprüche

1. Fahrzeuginformationsverarbeitungsvorrichtung mit:
einer Speichereinheit (11), in der Fahrzustände eines Fahrzeugs (I), die jeweils eine Höhe des Fahrzeugs und eine Art der Antriebsleistungsverteilung enthalten, derart gespeichert sind, dass sie jeweiligen Fahrmodi entsprechen;
einer Touchscreen-Anzeige (20), die eine Eingabemanipulation zum Auswählen eines der Fahrmodi empfängt; und
einer Anzeigesteuereinheit (13), die die Touchscreen-Anzeige (20) veranlasst, eine Anzeige zu erzeugen, die den ausgewählten Fahrmodus anzeigt;
**dadurch gekennzeichnet, dass**:
die Anzeigesteuereinheit (13) die Touchscreen-Anzeige (20) veranlasst, anzuzeigen:
einen Fahrmodusauswahlbereich (A), mit dem einer der Fahrmodi auswählbar ist; und
einen Fahrzeuganzeigebereich (B), in dem ein dem ausgewählten Fahrmodus entsprechender Fahrzustand und ein schematisches Bild des Fahrzeugs in der Form einer Animation angezeigt werden und ein Erscheinungsbild des Fahrzeugs (I) angezeigt wird.

2. Fahrzeuginformationsverarbeitungsvorrichtung nach Anspruch 1, **dadurch gekennzeichnet, dass** die Anzeigesteuereinheit (13) die Touchscreen-Anzeige (20) veranlasst, einen dem Fahrmodus entsprechenden Straßenoberflächenzustand zusammen mit dem Erscheinungsbild des Fahrzeugs (I) anzuzeigen.

3. Fahrzeuginformationsverarbeitungsvorrichtung nach Anspruch 1 oder 2, **dadurch gekennzeichnet, dass** die Anzeigesteuereinheit (13) die Touchscreen-Anzeige (20) veranlasst, das schematische Bild des Fahrzeugs (I) in der Form einer Seitenansicht anzuzeigen.

4. Fahrzeuginformationsverarbeitungsvorrichtung nach einem der Ansprüche 1 bis 3, **dadurch gekennzeichnet, dass** die Anzeigesteuereinheit (13) die Touchscreen-Anzeige (20) veranlasst, das Erscheinungsbild des Fahrzeugs (I) in der Form einer perspektivischen Ansicht anzuzeigen.

5. Fahrzeuginformationsverarbeitungsvorrichtung nach einem der Ansprüche 1 bis 4, **dadurch gekennzeichnet, dass** nach dem Anzeigen des schematischen Bildes des Fahrzeugs (I) und bis zum Anzeigen des Erscheinungsbildes des Fahrzeugs (I) die Anzeigesteuereinheit (13) die Touchscreen-Anzeige (20) veranlasst, eine Animation anzuzeigen, in der ein Bild des Fahrzeugs (I) gedreht wird.

6. Fahrzeuginformationsverarbeitungsvorrichtung nach einem der Ansprüche 1 bis 5, **dadurch gekennzeichnet, dass**
die Touchscreen-Anzeige (20) einen Anzeigebereich (21) aufweist und zwischen einem Fahrersitz und einem Beifahrersitz des Fahrzeugs (I) angeordnet ist; und
die Anzeigesteuereinheit (13) die Touchscreen-Anzeige (20) veranlasst, in dem Anzeigebereich (21) die mehreren Fahrmodi und das schematische Bild und/oder das Erscheinungsbild des Fahrzeugs (I) auf eine derartige Weise anzuzeigen, dass sich eine Anzeigeposition der mehreren Fahrmodi näher am Fahrersitz befindet als eine Anzeigeposition des schematischen Bildes und/oder des Erscheinungsbildes des Fahrzeugs (I).

## Revendications

1. Appareil de traitement d'informations de véhicule, comprenant :
une unité de stockage (11) à l'intérieur de laquelle des états de fonctionnement d'un véhicule (I) dont chacun inclut une hauteur du véhicule et un mode de distribution de puissance d'entraînement sont stockés de telle sorte qu'ils correspondent à des modes de fonctionnement respectifs ;
un affichage à écran tactile (20) qui reçoit une manipulation d'entrée pour sélectionner l'un des modes de fonctionnement ; et
une unité de commande d'affichage (13) qui force l'affichage à écran tactile (20) à réaliser un affichage qui indique le mode de fonctionnement sélectionné, **caractérisé en ce que** :
l'unité de commande d'affichage (13) force l'affichage à écran tactile (20) à afficher :
une région de sélection de mode de fonctionnement (A) avec laquelle l'un des modes de fonctionnement peut être sélectionné ; et
une région d'affichage de véhicule (B) sur laquelle un état de fonctionnement qui correspond au mode de fonctionnement sélectionné et une image squelette du véhicule sont affichés sous la forme d'une animation et une apparence du véhicule (I) est affichée.

2. Appareil de traitement d'informations de véhicule selon la revendication 1, **caractérisé en ce que** l'unité de commande d'affichage (13) force l'affichage à écran tactile (20) à afficher un état de surface de route qui correspond au mode de fonctionnement en association avec l'apparence du véhicule (I).

3. Appareil de traitement d'informations de véhicule selon la revendication 1 ou 2, **caractérisé en ce que** l'unité de commande d'affichage (13) force l'affichage à écran tactile (20) à afficher l'image squelette du véhicule (I) sous la forme d'une vue de côté.

4. Appareil de traitement d'informations de véhicule selon l'une quelconque des revendications 1 à 3, **caractérisé en ce que** l'unité de commande d'affichage (13) force l'affichage à écran tactile (20) à afficher l'apparence du véhicule (I) sous la forme d'une vue en perspective.

5. Appareil de traitement d'informations de véhicule selon l'une quelconque des revendications 1 à 4, **caractérisé en ce que**, après l'affichage de l'image squelette du véhicule (I) et jusqu'à l'affichage de l'apparence du véhicule (I), l'unité de commande d'affichage (13) force l'affichage à écran tactile (20) à afficher une animation selon laquelle une image du véhicule (I) est tournée.

6. Appareil de traitement d'informations de véhicule selon l'une quelconque des revendications 1 à 5, **caractérisé en ce que** :
l'affichage à écran tactile (20) comporte une zone d'affichage (21) et est disposé entre un siège de conducteur et un siège de passager avant du véhicule (I) ; et
l'unité de commande d'affichage (13) force l'affichage à écran tactile (20) à afficher, dans la zone d'affichage (21), les plusieurs modes de fonctionnement et au moins un élément informatif pris parmi l'image squelette et l'apparence du véhicule (I) de telle sorte qu'une position d'affichage des plusieurs modes de fonctionnement soit plus proche du siège de conducteur qu'une position d'affichage de l'au moins un élément informatif pris parmi l'image squelette et l'apparence du véhicule (I).
